# EUROPÄISCHE PATENTSCHRIFT

(11) **EP 0 702 442 B1**
(45) Veröffentlichungstag und Bekanntmachung des Hinweises auf die Patenterteilung: **02.12.1998**
(21) Anmeldenummer: 95113884.1
(22) Anmeldetag: 05.09.1995
(51) Int. Cl.: H02G 3/10

(54) **Träger für Elektro-Installationsgeräte zur Benutzung mit Elektro-Installationskanälen unterschiedlicher Höhe**
Electrical accessory mounting for use with electrical trunkings of various heights
Support d'accessoires électriques pour canalisations à diverses hauteurs

(30) Priorität: 14.09.1994 DE 4432669
(43) Veröffentlichungstag der Anmeldung: 20.03.1996
(73) Patentinhaber: Tehalit GmbH, D-67716 Heltersberg (DE)
(72) Erfinder: Mayer, Hans, D-66851 Bann (DE)
(74) Vertreter: Patentanwälte Möll und Bitterich

(56) Entgegenhaltungen:
- EP-A- 0 159 554
- EP-A- 0 239 456

## Beschreibung

Die Erfindung betrifft Geräteträger zur Benutzung mit Elektro-Installationskanälen unterschiedlicher Höhe gemäß dem Oberbegriff des Anspruchs 1.

Elektro-Installationskanäle und Geräteträger zur Verwendung mit diesen sind seit langem bekannt. Beispiele finden sich in GB-A-569 697 aus dem Jahre 1943, FR-A-15 52 492, FR-A-13 67 235, FR-A-21 57 956 usw. üblicherweise bilden die Installationskanäle und die Geräteträger ein komplettes System, in dem alle Teile nach Größe und Form exakt aufeinander abgestimmt sind. In vielen Fällen werden nun Installationskanäle mit unterschiedlichen Höhen, beispielsweise 30, 40 und 50 mm, eingesetzt. Dies hat zur Folge, daß zu jedem Installationskanal ein kompletter Satz größen- und formmäßig passender Geräteträger hergestellt und auf Lager gehalten werden muß. Dies ist unbefriedigend.

Für diese Fälle wurden deshalb Geräteträger mit Abdeckschiebern entwickelt, die bei Verwendung von Kanälen geringerer Höhe den verbleibenden Ausschnitt in den Geräteträger-Oberteilen abdecken. Ein Beispiel hierfür zeigt die EP-A-0 159 554.

Eine Variante zeigt die FR-A-25 95 513. Deren auf den Kanal aufsetzbare Abdeckung besitzt Vergrößerungsflächen mit eingeformten Markierungen. Soll dieser Geräteträger mit unterschiedlich breiten Kanälen verwendet werden, wird die Erweiterungsfläche der Abdeckung entsprechend verkürzt. Die Lagerhaltung ist dank dieser Konstruktion reduziert. Sollte der Installateur jedoch vesehentlich zu viel abschneiden, muß ein neuer Geräteträger verwendet werden.

Der vorliegenden Erfindung liegt die Aufgabe zugrunde, einen Geräteträger der eingangs genannten Art anzugeben, der ohne nachträgliche Bearbeitung mit unterschiedlich hohen Elektro-Installationskanälen verwendet werden kann.

Diese Aufgabe wird gelöst durch einen Geräteträger mit den Merkmalen des Anspruchs 1.

Dank der erfindungsgemäßen Konstruktion entfällt jegliche Nachbearbeitung des Verschlußteils durch den Elektromonteur. Dieser klemmt das Verschlußteil bei Bedarf lediglich auf die entsprechenden Klemmpfosten, was praktisch keine Zeit beansprucht. Nach dem Aufsetzen der Haube sitzen die Verschlußteile unverrückbar fest.

Eine vorteilhafte Weiterbildung der Erfindung ist Gegenstand des Anspruchs 2. Dank dieser Ausgestaltung kann das Verschlußstück in zwei unterschiedlichen Positionen aufgeklemmt werden und zwar so, daß einmal die kürzere, einmal die längere Rechteckplatte wirksam ist, so daß der Geräteträger mit insgesamt drei Elektro-Installationskanälen unterschiedlicher Höhe verwendet werden kann, ohne daß irgendwelche Bearbeitungen durch den Elektromonteur erforderlich sind.

Anhand der Zeichnung soll die Erfindung in Form zweier Ausführungsbeispiele erläutert werden. Es zeigen
- Fig. 1: eine Draufsicht auf einen Geräteträger, montiert auf einem Elektro-Installationskanal geringer Höhe, mit halb aufgeschnittener Haube,
- Fig. 2: einen Längsschnitt durch Geräteträger und Elektro-Installationskanal der Fig. 1,
- Fig. 3a bis c: drei Ansichten eines Verschlußstücks und
- Fig. 4: ausschnittsweise eine Draufsicht auf den Geräteträger der Fig. 1, jedoch ohne Haube, montiert an einem Elektro-Installationskanal mittlerer Höhe.

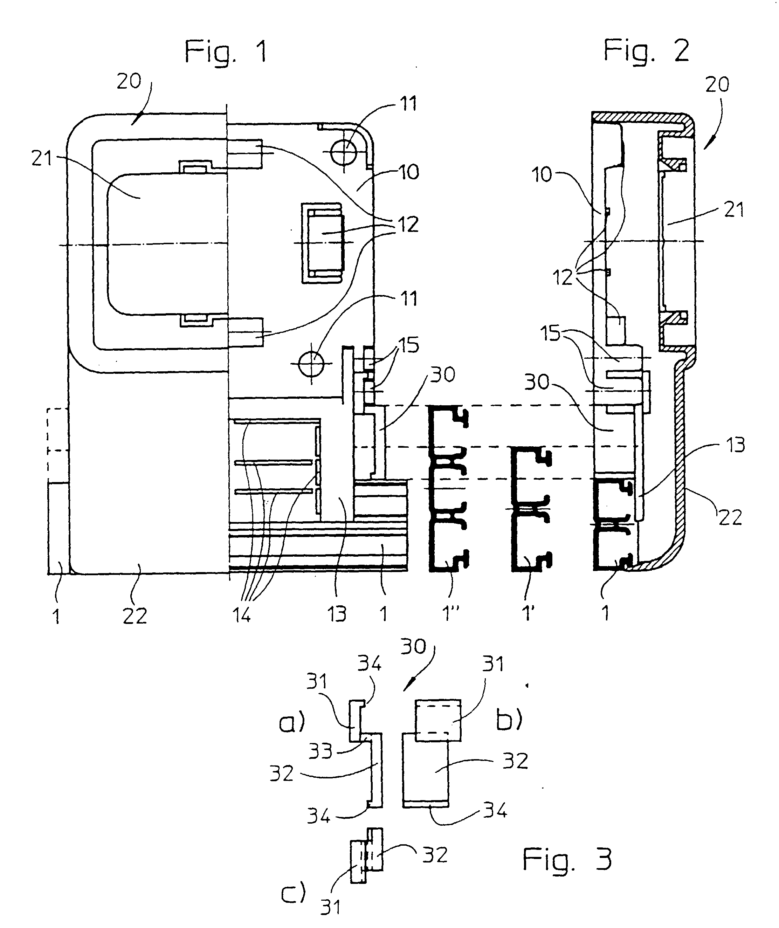

Die Fig. 1 und 2 zeigen als teilweise aufgebrochene Draufsicht bzw. als Längsschnitt einen Elektro-Installationskanal 1 geringer Höhe mit daran montiertem Geräteträger 10, 20. Ferner sind zwei Elektro-Installationskanäle 1', 1'' größerer Höhe dargestellt. Die Höhen der Kanäle 1, 1', 1'' betragen beispielsweise 20, 30 und 40 mm.

Der Geräteträger besteht aus einer Grundplatte 10 und einer darauf aufsetzbaren Haube 20. Die Grundplatte 10 besitzt Öffnungen 11 für die Wandmontage und Haltevorrichtungen 12 für die Elektro-Installationsgeräte (nicht dargestellt). Unten ist eine Schürze 13 mit vorbereiteten Bruchlinien bzw. Markierungen 14 angeformt. Diese Schürze 13 überragt wenigstens teilweise den Kanal 1. Ihre Aufgabe ist die zusätzliche elektrische Isolation der herausgeführten Leitungen gegen die im Kanal 1 weitergeführten Leitungen.

Die Haube 20 besitzt eine zentrale Öffnung 21, durch die hindurch das Elektro-Installationsgerät (nicht dargestellt) zugänglich ist.

Das Unterteil 22 der Haube 20 greift über den Kanal 1 und deckt diesen sowie die herausgeführten Leitungen ab. Die Haube 20 besitzt zu diesem Zweck seitliche Aussparungen, deren Größe auf den Elektro-Installationskanal 1'' mit der größten Höhe abgestimmt ist. Bei der Verwendung mit einem Kanal 1, 1' geringerer Höhe würde daher eine entsprechende Lücke verbleiben, die nicht nur unschön aussieht, sondern auch die elektrische Sicherheit beeinträchtigt. Diese Lücke wird geschlossen durch ein spezielles Verschlußstück 30, das anhand der Fig. 3 noch näher beschrieben werden soll. Zur Befestigung des Verschlußstückes 30 sind an den Längskanten der Grundplatte 10 jeweils zwei Klemmpfosten 15 angeformt. Der unterste Klemmpfosten 15 ist so positioniert, daß er den größten Sockelleisten-Kanal 1'' gerade berührt.

Wie Fig. 1 erkennen läßt, ist das Verschlußstück 30 auf den untersten Klemmpfosten 15 aufgeklemmt und füllt den Spalt bis zu dem montierten Kanal 1 geringster Höhe gerade aus.

Die Fig. 3a bis c zeigen das Verschlußstück 30 in Seitenansicht, Draufsicht und Druntersicht. Es besteht aus zwei Rechteckplatten 31, 32 unterschiedlicher Länge, die über einen Verbindungssteg 33 miteinander verbunden sind. An den Enden der beiden Rechteckplatten 31, 32 befindet sich jeweils eine Klemmleiste 34.

Wie Fig. 3b erkennen läßt, sind die beiden Rechteckplatten 31, 32 in der Plattenebene gegeneinander parallel versetzt. Der Versatz entspricht der Stärke der Grundplatte 10.

Die Länge der beiden Rechteckplatten 31, 32 ist auf die Höhendifferenz der Kanäle 1, 1' geringerer Höhe exakt abgestimmt.

Ist das Verschlußstück 30 so aufgesetzt, daß die kürzere Rechteckplatte 31 auf den unteren Klemmpfosten 15 aufgeklemmt ist, so verschließt die längere Rechteckplatte 32 die Lücke in der Seitenwand der Haube 20 bis zur Oberkante des Installationskanals 1.

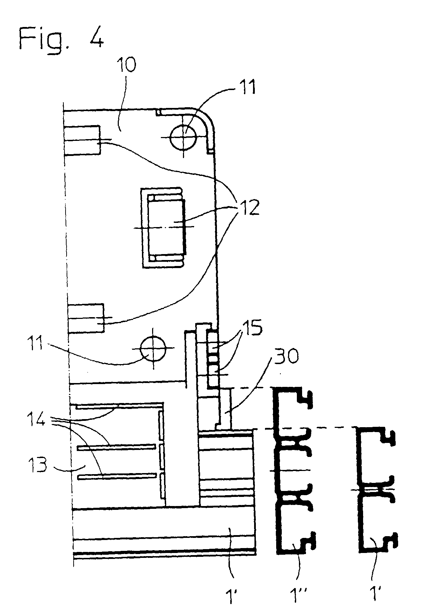

Bei der in Fig. 4 dargestellten Ausführungsform ist die Grundplatte 10 an dem Installationskanal 1' mittlerer Höhe montiert. Das Verschlußteil 30 ist so gedreht, daß die längere Rechteckplatte 32 auf die Klemmpfosten 15 aufgeklemmt ist, während die kürzere Rechteckplatte 31 die Lücke in der Seitenwand der Haube 20 bis zur Oberkante des Installationskanals 1' verschließt.

## Patentansprüche

1. Geräteträger zur Benutzung mit Elektro-Installationskanälen (1, 1', 1'') unterschiedlicher Höhe, bestehend aus
- einer Grundplatte (10), die Öffnungen (11) für Befestigungsschrauben, Haltevorrichtungen (12) für ein Elektro-Installationsgerät und
- eine den Elektro-Installationskanal (1, 1', 1'') teilweise überdeckende Schürze (13) besitzt,
- einer auf die Grundplatte (10) aufsetzbaren und dabei den Elektro-Installationskanal (1, 1', 1'') überdeckenden Haube (20), die
-- einen zentralen Ausschnitt (21) für das Elektro-Installationsgerät und
-- zwei seitliche Ausschnitte für den Elektro-Installationskanal (1'') mit der größten Höhe besitzt,
-- und zwei lose Verschlußteile (30), die bei Verwendung von Elektro-Installationskanälen (1, 1') kleinerer Höhe die durch die seitlichen Ausschnitte verbleibenden Lücken in den Seitenwänden der Haube (20) verschließen,
gekennzeichnet durch die Merkmale:
- an beiden Längskanten der Grundplatte (10) ist wenigstens ein Klemmpfosten (15) vorgesehen,
- die Klemmpfosten (15) stoßen an den Elektro-Installationskanal (1'') mit der größten Höhe,
- jedes Verschlußteil (30) besteht aus zwei Rechteckplatten (31, 32), die mittels eines Verbindungsstegs (33) miteinander verbunden sind,
- am Ende wenigstens einer Rechteckplatte (31) ist eine Klemmleiste (34) vorgesehen, deren Abstand vom Verbindungssteg (33) der Breite des Klemmpfostens (15) entspricht, so daß der Klemmpfosten (15) zwischen dem Verbindungssteg (33) und der Klemmleiste (34) einklemmbar ist,
- die beiden Rechteckplatten (31, 32) sind in der Plattenebene gegeneinander parallel versetzt, wobei der Versatz der Stärke der Grundplatte (10) entspricht.

2. Geräteträger nach Anspruch 1, gekennzeichnet durch die Merkmale:
- an den Längskanten der Grundplatte (10) sind jeweils zwei Klemmpfosten (15) nebeneinander vorgesehen, zwischen denen ein Abstand mit wenigstens der Stärke der Klemmleisten (34) existiert,
- eine zusätzliche Klemmleiste (34) ist am Ende der anderen, längeren Rechteckplatte (32) vorgesehen, wobei der Abstand der Klemmleiste (34) der längeren Rechteckplatte (32) vom Verbindungssteg (33) so gewählt ist, daß jeweils beide Klemmpfosten (15) zwischen Klemmleiste (34) und Verbindungssteg (33) einklemmbar sind.

## Claims

1. An apparatus holder for use with skirting trunkings (1,1',1'') of differing height, comprising
- a base plate (10) which has openings (11) for fastening screws, retaining means (12) for an electrical apparatus and an apron (13) partly overlapping the trunking (1,1',1'),
-- a hood (20) which can be mounted on the base plate (10), whereupon it overlaps the trunking (1,1',1"), which hood has a central opening (21) for the electrical apparatus and
-- two lateral openings for the trunking (1'') of the greatest height,
-- and two loose closure members (30) which when using trunkings (1,1') of lower height close the gaps left by the openings in the side walls of the hood (20),
characterised by the features:
- on both longitudinal edges of the base plate (10) there is provided at least one terminal post (15),
- the terminal posts (15) abut against the trunking (1'') of the greatest height,
- each closure member (30) comprises two rectangular plates (31,32) which are joined together by means of a connecting web (33),
- at the end of at least one rectangular plate (31) there is provided a terminal strip (34), the distance of which from the connecting web (33) corresponds to the width of the terminal post (15) so that the terminal post (15) can be clamped between the connecting web (33) and the terminal strip (34),
- the two rectangular plates (31,32) are offset parallel with respect to one another in the plane of the plates, the offset corresponding to the thickness of the base plate (10).

2. An apparatus holder according to Claim 1,
characterised by the features:
- in each case two terminal posts (15) are provided side by side on the longitudinal edges of the base plate (10), between which posts there is a spacing having at least the thickness of the terminal strips (34),
- an additional terminal strip (34) is provided at the end of the other, longer rectangular plate (32), wherein the distance of the terminal strip (34) of the longer rectangular plate (32) from the connecting web (33) is chosen so that in each case both terminal posts (15) can be clamped between a terminal strip (34) and a connecting web (33).

## Revendications

1. Support d'appareillage électrique pour canalisations à diverses hauteurs (1, 1', 1") comprenant une plaque de base (10), qui présente des orifices (11) pour des vis de fixation, des dispositifs de retenue (12) pour un appareil électrique et un tablier (13) recouvrant partiellement la canalisation (1, 1', 1"), un capot (20) qui peut être posé sur la plaque de base (10) et recouvre alors la canalisation (1, 1', 1") et qui présente une découpe (21) centrale pour l'appareil électrique, deux découpes latérales pour la canalisation (1") ayant la plus grande hauteur, et deux pièces de fermeture (30) mobiles, qui ferment les vides restants dans les parois latérales du capot (20) par les découpes latérales lorsqu'on utilise des canalisations (1,1') ayant une hauteur inférieure, caractérisé en ce qu'est prévu au moins un montant de blocage (15) sur les deux arêtes longitudinales de la plaque de base (10) ; en ce que les montants de blocage (15) butent contre la canalisation (1") ayant la plus grande hauteur ; en ce que chaque pièce de fermeture (30) comprend deux plaques rectangulaires (31, 32), qui sont reliées entre elles au moyen d'une barre de liaison (33) ; en ce que, sur l'extrémité d'au moins une plaque rectangulaire (31), une baguette de blocage (34) est prévue, dont la distance à la barre de liaison (33) correspond à la largeur du montant de blocage (15), de sorte que le montant de blocage (15) peut être coincé entre la barre de liaison (33) et la baguette de blocage (34) ; en ce que les deux plaques rectangulaires (31, 32) sont décalées parallèlement l'une par rapport à l'autre dans le plan des plaques, le déport correspondant à l'épaisseur de la plaque de base (10).

2. Support d'appareillage selon la revendication 1, caractérisé en ce que, sur les arêtes longitudinales de la plaque de base (10), sont prévus deux montants de blocage (15) de façon juxtaposée, séparés par un espacement correspondant au moins à l'épaisseur des baguettes de blocage (34), et en ce qu' une baguette de blocage (34) supplémentaire est prévue sur l'extrémité de l'autre plaque rectangulaire (32) plus longue, la distance de la baguette de blocage (34) de la plaque rectangulaire (32) plus longue à la barre de liaison (33) étant telle que deux montants de blocage (15) peuvent être coincés entre la baguette de blocage (34) et la barre de liaison (33).
